# EUROPEAN PATENT APPLICATION

(11) **EP 2 843 800 A1**
(43) Date of publication of application: **04.03.2015**
(21) Application number: 13764849.9
(22) Date of filing: 21.03.2013
(51) Int. Cl.: H02J 17/00, B60L 11/18, H02J 7/00

(54) **POWER SUPPLYING DEVICE, CHARGING DEVICE, POWER SUPPLYING METHOD, AND POWER SUPPLYING PROGRAM**

(30) Priority: 22.03.2012 JP 2012065825
(71) Applicant: Kabushiki Kaisha Toyota Jidoshokki, Kariya-shi, Aichi 448-8671 (JP)
(72) Inventor: KATO, Isami, Kariya-shi Aichi 448-8671 (JP); HIKA, Koji, Kariya-shi Aichi 448-8671 (JP); MABUCHI, Mitsuhiro, Kariya-shi Aichi 448-8671 (JP); HIRAYAMA, Yuichi, Kariya-shi Aichi 448-8671 (JP)
(74) Representative: Winter, Brandl, Fürniss, Hübner, Röss, Kaiser, Polte - Partnerschaft mbB
(86) International application number: PCT/JP2013/058058
(87) International publication number: WO 2013/141295

(57) **Abstract**

A feeding apparatus and a charging apparatus configured to reduce costs even in a facility in which non-contact power feeding to a plurality of vehicles can be performed, a feeding method, and a feeding program are provided. The feeding apparatus includes: a feeding unit configured to feed power in a non-contact manner to the charging apparatus mounted on a vehicle; and a feeding control unit which receives vehicle detection information from a sensor configured to transmit vehicle detection information when a vehicle is detected, executes control so that the feeding unit provided in the feeding apparatus feeds first power determined for each feeding apparatus so as to specify the feeding apparatus, transmits charging start information indicating a start of charging when feeding unit specifying information containing information to indicate the power level at which power is received from the feeding unit is received from the charging apparatus, and the received power level is determined to be within a specific power range that is stored in a storage unit and that indicates the determined power level range, and executes control so that the feeding unit feeds second power in order to charge a battery unit of the charging apparatus.

## Description

### TECHNICAL FIELD

The embodiments discussed herein are related to feeding apparatuses configured to execute non-contact power feeding, charging apparatuses, feeding methods, and feeding programs.

### BACKGROUND ART

Recently, as one charging system for a vehicle such as an electric vehicle (EV) and a plug-in hybrid vehicle, non-contact power feeding using electromagnetic induction is known.

In non-contact power feeding, a sensor or a radio unit to detect that a vehicle is parked is assumed to be included in order to specify a feeding unit of a feeding apparatus for supplying power to the vehicle when the vehicle is parked at a predetermined position. Therefore, the feeding apparatus must include a sensor, a radio unit, or the like, which results in an increase in cost.

In addition, as a technology related to an exchange of information necessary when feeding power to a charging apparatus from a power transmission coil of a feeding apparatus through a power receiving coil on a vehicle side, a communication device using a signal transfer coil arranged separately from the power transmission coil and the power receiving coil is disclosed (for example, Patent Document 1). According to this signal transfer coil communication device, a transmission-side coil is embedded in a central space of the power receiving coil for power transfer, and a reception-side coil is embedded in a central space of a feeding coil for power transfer. After the opposing positions of the reception-side coil and the transmission-side coil are determined, a signal is transferred through an extremely short void space between the reception-side coil and the transmission-side coil. In signal transfer, for example, feeding information such as charging instructions and demand power is transmitted and received. As a result, since signal transfer is performed through the extremely short void space, it is less likely to be affected by electromagnetic interference from outside and radio interference. A position information detection function that the signal transfer coil communication device has can detect position information on whether or not the power receiving coil is positioned on the opposing position to the feeding coil with necessary accuracy, by communication sensitivity between the coils.

However, in a system such as the above signal transfer coil communication device using proximity radio communication, a signal transfer coil provided in each of a power receiving coil on a vehicle and a power transmission coil of a feeding apparatus is configured on a one-to-one basis. Thus, the power transmission coil and its periphery become complicated in configuration, which results in an expensive feeding apparatus and charging apparatus.

In addition, in a facility (for example, a charge station) where power is fed to a plurality of vehicles adjacent to each other, the same number of feeding units and accompanying signal transfer coil communication devices as that of the feeding apparatuses are necessary, which results in an increase in cost.

Thus, in order to reduce costs, a configuration is considered wherein one feeding apparatus including a control unit for controlling a plurality of feeding units, and a radio is installed in a facility, and radio communication is performed with a plurality of vehicles. As a result, the configuration of the periphery related to a signal transfer coil and a signal transfer coil communication device provided in each feeding unit can be replaced with one radio, which results in a cost reduction. As a radio communication, a radio having a close communication range, such as Bluetooth (registered trademark) and ZigBee (registered trademark) could possibly be used.

### [Prior Art Reference]

### [Patent Document]

[Patent Document 1] Japanese Laid-open Patent Publication No. 2008-288889

### DISCLOSURE OF INVENTION

In view of the above problem, inventions aim to provide a feeding apparatus and a charging apparatus having a configuration capable of reducing costs even in a facility where a plurality of vehicles can perform non-contact power feeding, a feeding method, and a feeding program.

A feeding apparatus as one mode of the embodiments includes a feeding unit, a feeding control unit, and a radio communication unit. The feeding unit is in non-contact with a charging apparatus mounted on a vehicle, and outputs a first power and a second power. The radio communication unit performs radio communication. The feeding control unit controls the feeding unit. The feeding control unit makes the feeding unit output the first power of a magnitude corresponding to the feeding unit, in order to specify the feeding unit. The feeding control unit acquires, through the radio communication unit, feeding unit specifying information transmitted by the vehicle which has received the first power. The feeding control unit determines whether or not the magnitude of power indicated by the feeding unit specifying information is within a specific power range stored in advance, and transmits to the vehicle charging start information for starting charging when determining that the magnitude is within the specific power range. Then, the feeding control unit controls the feeding unit specified by the feeding unit specifying information so that it outputs the second power.

A charging apparatus which is another mode of the embodiments is used for non-contact charging and is mounted on a vehicle, includes a power receiving unit, a charging unit, and a control device. The power receiving unit receives power fed from a feeding apparatus. The feeding unit charges a battery unit with received power. The control device transmits feeding unit specifying information containing information indicating the received power level. The control device performs control to charge the battery unit when receiving charging start information for starting charging which is transmitted from the feeding apparatus, in the case when the transmitted power level is within a specific power range that is stored in a storage unit of the feeding apparatus and that indicates the range of a determined power level.

### EFFECT OF THE INVENTION

According to the embodiments, even in a facility where a plurality of vehicles can perform non-contact charging, costs can be reduced.

### BRIEF DESCRIPTION OF DRAWINGS

FIG. 1 is a diagram illustrating one example of a charge station in embodiment 1;
FIG. 2 is a diagram illustrating a relationship between a charging apparatus and a vehicle in embodiment 1;
FIG. 3 is a diagram illustrating a relationship between a feeding apparatus and a server;
FIG. 4 is a diagram illustrating one example of a feeding apparatus;
FIG. 5 is a diagram illustrating one example of a charging apparatus;
FIG. 6 is a diagram illustrating one example of a control device of each of the feeding apparatus and the charging apparatus, and hardware of a server;
FIG. 7 is a flow diagram illustrating one example of operation of the feeding apparatus;
FIG. 8 is a diagram illustrating one example of a data structure of feeding information;
FIG. 9 is a diagram illustrating one example of a state during specifying of a feeding unit and during charging;
FIG. 10 is a flow diagram illustrating one example of operation of the charging apparatus;
FIG. 11 is a diagram illustrating a time chart illustrating one example of operation states of the feeding apparatus and the charging apparatus;
FIG. 12 is a diagram illustrating one example of a charge station in embodiment 2;
FIG. 13 is a diagram illustrating a relationship between a feeding apparatus and a server in embodiment 2;
FIG. 14 is a diagram illustrating one example of the feeding apparatus in embodiment 2;
FIG. 15 is a flow diagram illustrating one example of operation of the feeding apparatus in embodiment 2;
FIG. 16 is a diagram illustrating one example of a data structure of feeding information in embodiment 2;
FIG. 17 is a flow diagram illustrating one example of operation of a charging apparatus in embodiment 2; and
FIG. 18 is a diagram illustrating a time chart illustrating operation states of the feeding apparatus and the charging apparatus in embodiment 2.

### MODE FOR CARRYING OUT THE INVENTION

In embodiment 1, a first power assigned to each feeding unit, intended to specify the feeding unit, and differing in magnitude of power with respect to each feeding unit is output from a coil of a feeding unit of a feeding apparatus. Next, when the coil of a charging apparatus of a vehicle is determined to have received the first power, feeding unit specifying information specifying the feeding unit is transmitted from a radio communication unit of the vehicle. The feeding unit specifying information contains received power.

Next, the radio communication unit of the feeding apparatus receives the feeding unit specifying information, and forwards it to the feeding control unit of the feeding apparatus. The feeding control unit determines whether or not the magnitude of power indicated by the received feeding unit specifying information is within a specific power range stored in advance. When the magnitude of power is determined to be within the specific power range, the feeding unit related to the specific power range is specified. Next, charging start information for making the specified feeding unit start feeding power is transmitted to the vehicle through the radio communication unit of the feeding apparatus. Also, the feeding unit specified by the feeding unit specifying information is made to output second power.

According to embodiment 1, since the feeding apparatus can be specified without including a sensor or a radio unit configured to specify the feeding apparatus configured to feed power to a vehicle when the vehicle is parked in a predetermined position, costs can be reduced.

In addition, since a configuration related to radio communication on a feeding apparatus side can be executed by the one radio communication unit, costs can be reduced.

Hereinafter, embodiments will be described in detail according to drawings.

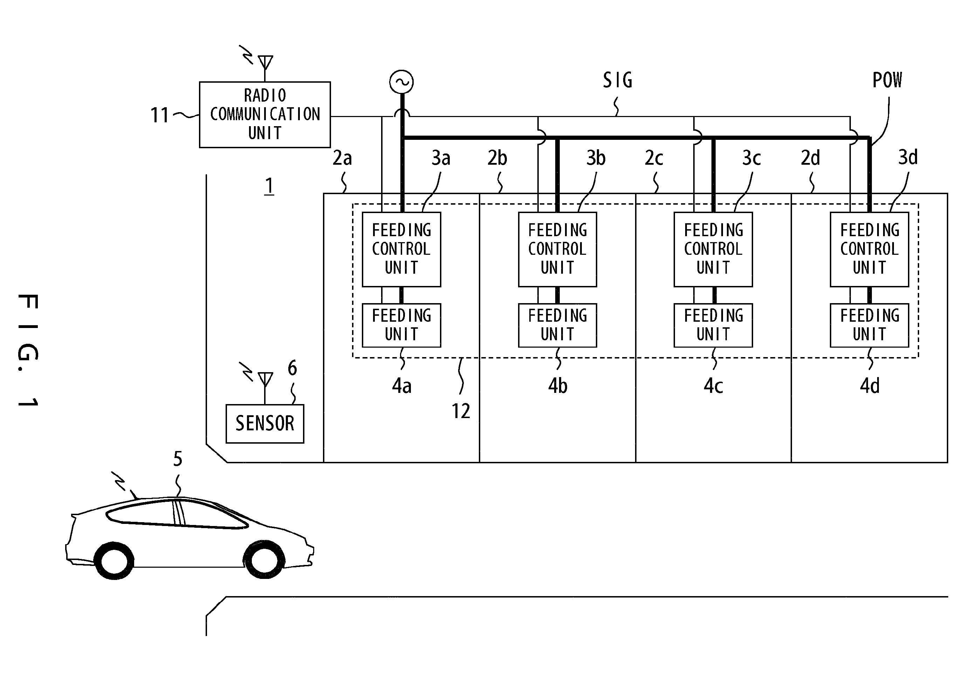

FIG. 1 is a diagram illustrating one example of a charge station in embodiment 1. In the charge station 1 illustrated in FIG. 1, there are parking areas 2a-2d for parking a vehicle 5. In each of the parking areas 2a-2d, a first device 12 is arranged and a radio communication unit 11 is arranged separately from the first device 12. The first device 12 has feeding units 4a-4d, and feeding control units 3a-3d associated with the feeding units 4a-4d respectively, and the feeding units and the feeding control units will be described hereinafter. The feeding control units 3a-3d of the first device 12 perform power transmission control when performing non-contact power feeding to the vehicle 5, and the feeding units 4a-4d transmit power to the vehicle 5.

In addition, a sensor 6 is provided in the charge station 1. The sensor 6 detects the vehicle 5 entering the charge station 1, and notifies the radio communication unit 11 of the fact that the vehicle has been detected.

The radio communication unit 11 is connected to the feeding control units 3a-3d, the radio communication unit 11 and the feeding control units 3a-3d are connected, for example, through a Local Area Network (LAN), and the radio communication unit transmits a vehicle detection signal sent by the sensor 6 to the feeding control unit 3. For example, the one radio communication unit 11 is arranged somewhere in the charge station 1, so as to make the feeding control units 3a-3d of the first device 12 and the radio communication unit 11 communicate with each other.

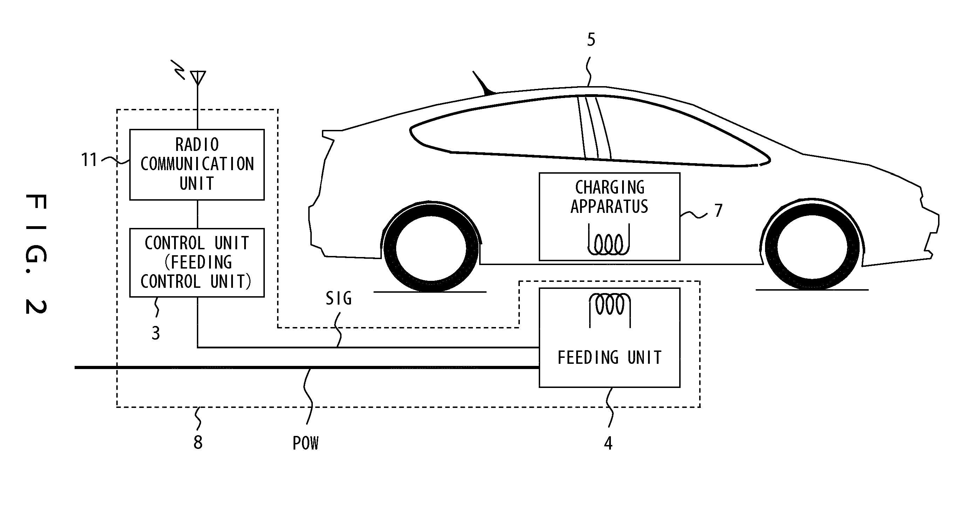

FIG. 2 is a diagram illustrating a relationship between a feeding apparatus and a vehicle in embodiment 1. The feeding apparatus 8 in FIG. 2 includes the feeding control unit 3, the feeding unit 4, and the radio communication unit 11. The radio communication unit 11 performs radio communication with the vehicle 5 and the sensor 6 or the like. The feeding control unit 3 controls the feeding unit 4 configured to transmit power fed from a commercial power source to the vehicle 5. The feeding control unit 3 performs control related to calculation of a charging fee, calculation of a parking fee, payments of various fees, and the like. The feeding control unit 3 includes a communication interface, and communicates with the radio communication unit 11 and a server 9.

The feeding unit 4 is used when power is transmitted to the vehicle 5, and is used for specifying in which of the areas 2a-2d the vehicle 5 is parked.

In the feeding apparatus 8 in FIG. 2, the feeding control unit 3 and the feeding unit 4 are connected to each other through a signal line SIG.

The vehicle 5 in FIG. 2 includes a charging apparatus 7. The charging apparatus 7 receives power transmitted from the feeding unit 4, and charges a battery unit 506 connected to the charging apparatus 7. The battery unit 506 is a rechargeable secondary battery, and for example, a lithium-ion secondary battery, and a nickel-hydrogen secondary battery are possible.

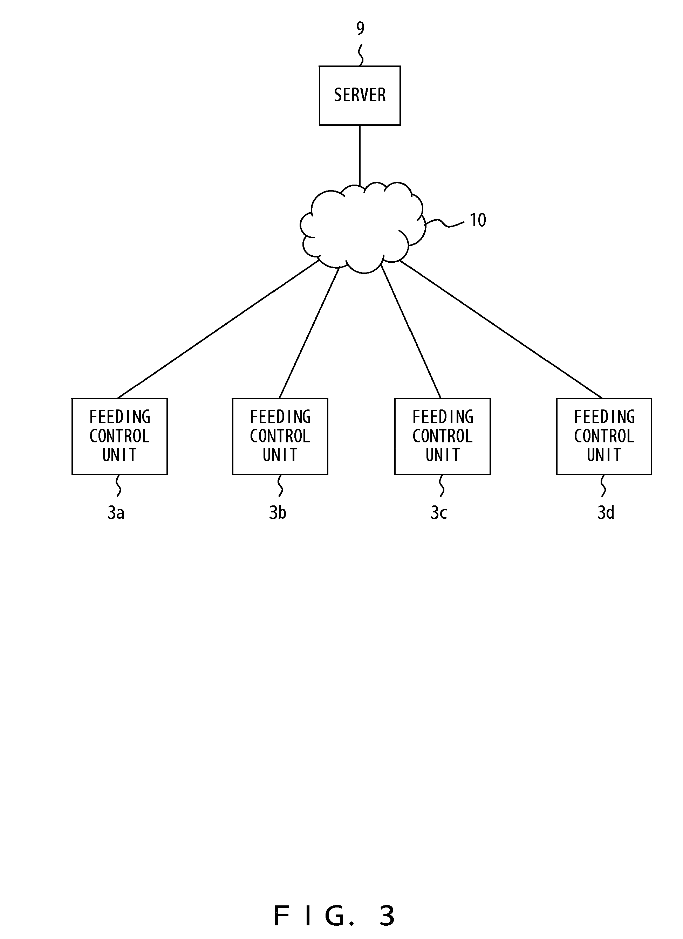

FIG. 3 is a diagram illustrating a relationship between the feeding apparatus and the server. Each of the feeding control units 3a-3d illustrated in FIG. 3 communicates with the server 9 via a network 10. The server 9 executes processing related to, for example, calculation of a charging fee, calculation of a parking fee, payments of various fees, and the like, and transmits the processing result to the feeding control units 3a-3d. The feeding control units 3a-3d and the server 9 may communicate with each other via the radio communication unit 11 by making the radio communication unit 11 and the server 9 communicate with each other.

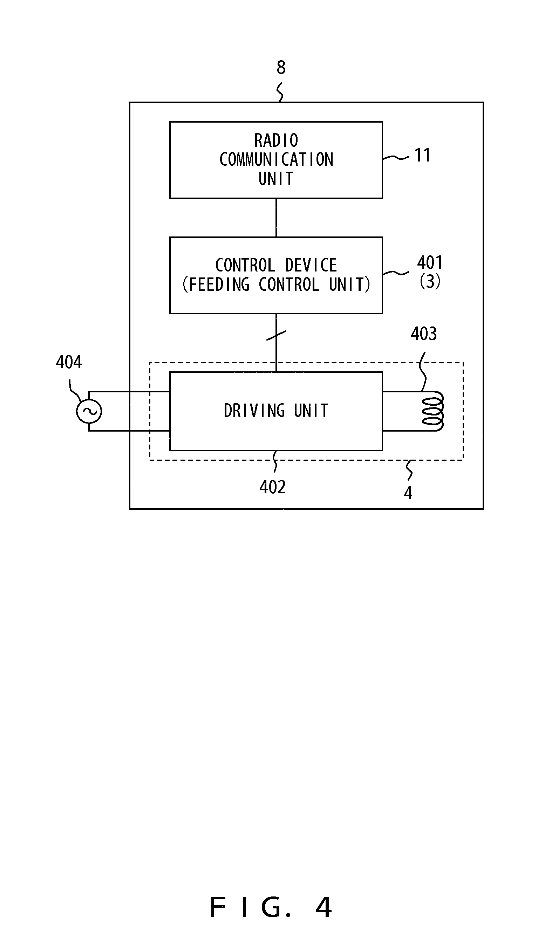

FIG. 4 is a diagram illustrating one example of the feeding apparatus. The feeding apparatus 8 in FIG. 4 includes a feeding control unit 3 (control device 401), a driving unit 402, and a first coil 403. The driving unit 402 and the first coil 403 constitute the feeding unit 4. The feeding unit 4 feeds power to a charging apparatus mounted on a vehicle in a non-contact manner.

The feeding control unit 3 controls the driving unit 402 so that a first power whose power transmission level is determined for each of feeding 4a-4d is output from the first coil 403 in order to specify the feeding unit 4 when receiving vehicle detection information from the sensor 6 configured to detect that the vehicle 5 has entered the charge station 1. The feeding control unit 3 receives from the charging apparatus 7 of the vehicle 5 feeding unit specifying information corresponding to the power level received by the vehicle 5. When the received power level is determined to be within the specific power range that is stored in advance in the storage unit and that indicates the determined power level range, the feeding control unit 3 transmits to the charging apparatus 7 charging start information indicating the start of charging. Thereafter, the feeding control unit 3 performs control so that the feeding unit 4 feeds a second power (charging power) in order to charge the battery unit of the charging apparatus 7.

The control device 401 performs control so that the feeding unit 4 in preparation or during feeding power does not feed the first power.

The driving unit 402 converts power supplied from a commercial power source 404 into AC at a determined frequency and a determined power level to feed it to the first coil 403. Control such as conversion is performed by the control device 401.

The first coil 403 is used to feed power to the charging apparatus 7 mounted on a vehicle.

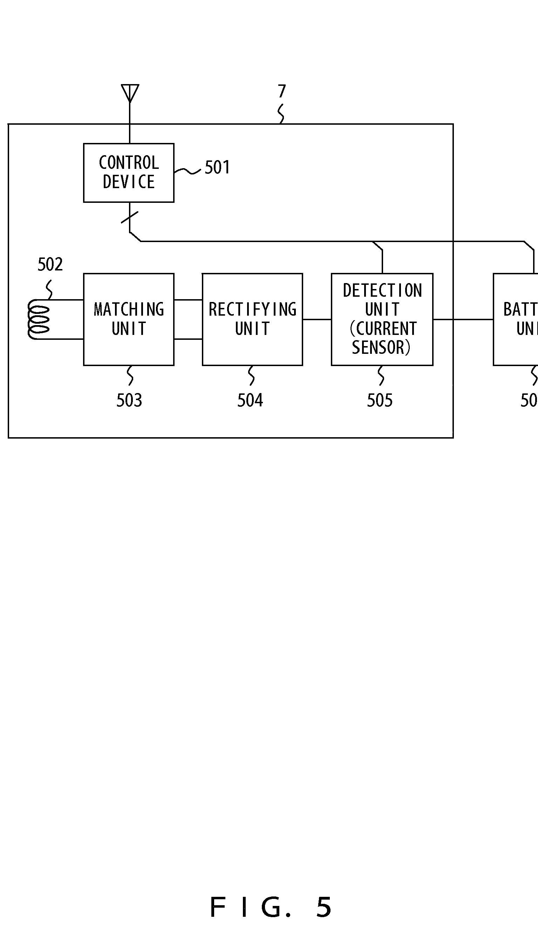

FIG. 5 is a diagram illustrating one example of the charging apparatus. The charging apparatus 7 of FIG. 5 includes a control device 501, a second coil 502 (power receiving unit), and a charging unit (a matching unit 503, a rectifying unit 504, a detection unit 505). The power receiving unit receives power fed from the feeding apparatus. The charging unit charges a battery unit 506 with the received power.

The control device 501 receives power transmitted from the feeding apparatus 8, and transmits feeding unit specifying information containing information indicating the received power level. The control device performs control to charge the battery unit when charging start information for starting charging transmitted from the feeding apparatus is received in the case in which the transmitted power level is within the specific power range that is stored in the storage unit of the feeding apparatus and that indicatesthe determined power level range.

The second coil 502 receives AC power transmitted from the feeding apparatus 8 through the first coil 403, and the received power is supplied to the matching unit 503.

The matching unit 503 performs impedance matching between the feeding apparatus 8 and the charging apparatus 7, and is controlled by the control device 501.

The rectifying unit 504 rectifies the received AC power to DC, and the power rectified to DC is supplied to the battery unit 506.

A sensor for detecting a current flowing in the battery unit 506 when charging the battery unit 506 is considered as the detection unit 505. For example, a current sensor is possible.

A rechargeable secondary battery or the like is considered as the battery unit 506.

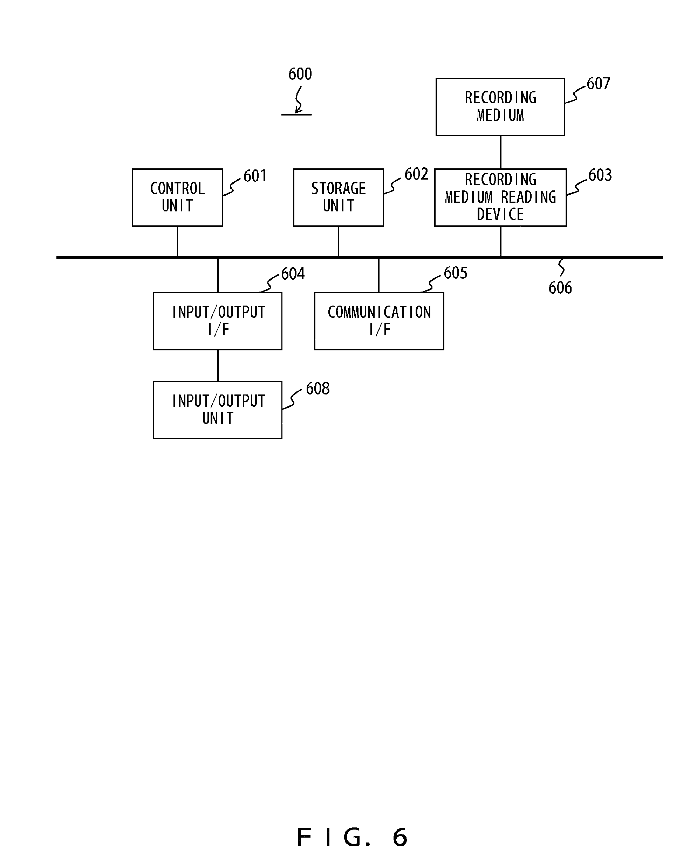

FIG. 6 is a diagram illustrating one example of each control device of each of the feeding apparatus and the charging apparatus, and one example of hardware of a server. The control device 401 of the feeding apparatus 8, the control device 501 of the charging apparatus 7, and hardware of the server 9 each include a control unit 601, a storage unit 602, a recording medium reading device 603, an input-output interface 604 (input-output I/F), a communication interface 605 (communication I/F), or the like. The above configuration units are connected to one another through a bus 606. The function of the server 9 can also be realized by using a cloud or the like.

As the control unit 601, use of a Central Processing Unit (CPU), a multicore CPU, a programmable device (Field Programmable Gate Array (FPGA), and a Programmable Logic Device (PLD) or the like) is considered.

As the storage unit 602, for example, a memory such as a Read Only Memory (ROM) or a Random Access Memory (RAM) type memory, or a hard disk or the like are considered. In the storage unit 602, data such as a parameter value and a variable value may be recorded, or the storage unit 602 may be used as a work area in execution. With respect to the feeding apparatus 8 and the server 9, a storage unit other than the storage unit 602 may be provided outside the feeding apparatus 8 and the server 9, and for example, it is possible to provide a database or the like.

The recording medium reading device 603 controls reading/writing of data from/to a recording medium 607 according to control by the control unit 601, and then makes the recording medium 607 record data written by control of the recording medium reading device 603, and makes the recording medium 607 read the recorded data. As the attachable/detachable recording medium 607, there are a magnetic-storage device, an optical disk, a magneto-optical recording medium, a semiconductor memory and the like, as a computer-readable non-transitory recording medium. As the magnetic-storage device, there is a hard disk device (HDD) or the like. As the optical disk, there are a Digital Versatile Disc (DVD), a DVD-RAM, a Compact Disc Read Only Memory (CD-ROM), a CD-R (Recordable)/RW (ReWritable), and the like. As the magneto-optical recording medium, there is a Magneto-Optical disk (MO), or the like. The storage unit 602 is included in the non-transitory recording medium.

The input/output interface 604 is connected with an input/output unit 608, receives input information, and transmits it to the control unit 601 through the bus 606. According to instructions from the control unit 601, operation information or the like is displayed on a display screen. As the input device of the input/output unit 608, for example, a keyboard, a pointing device (a mouse or the like), a touch panel and the like are considered. As the display which is the output unit of the input/output unit 608, for example, a liquid crystal display or the like is considered. The input/output unit 608 of the charging apparatus 7 is thought to be provided on a dashboard of vehicle 5. The output unit 608 may be an output device such as a Cathode Ray Tube (CRT) display, a printer, or the like.

The communication interface 605 is an interface for performing LAN connection and Internet connection. The communication interface 605 may also be used as an interface for performing LAN connection, Internet connection, and radio connection with another computer as necessary.

By using a computer having such a hardware configuration, various processing functions performed by the control device 401 of the feeding apparatus 8, the control device 501 of the charging apparatus 7, and the server 9 are realized. In this case, a program is provided in which processing content of the functions that the control device 401 of the feeding apparatus 8, the control device 501 of the charging apparatus 7, and the server 9 are supposed to have is described. By executing the program in the computer, the above processing functions are realized on the computer. The program describing the processing content can be recorded on the computer-readable recording medium 607.

When distributing the program, for example, the recording medium 607 such as a DVD and a CD-ROM on which the program is recorded is sold. The program can be recorded on a recording device of a server computer, and the program can be transferred from the server computer to another computer.

The computer executing the program stores for example, the program recorded on the recording medium 607 or the program transferred from the server computer, in its own storage unit 602. The computer reads the program from its own storage unit 602, and executes processing according to the program. The computer can also directly read the program from the recording medium 607 and execute processing according to the program. The computer can also successively execute processing according to the received program every time the program is transferred from the server computer.

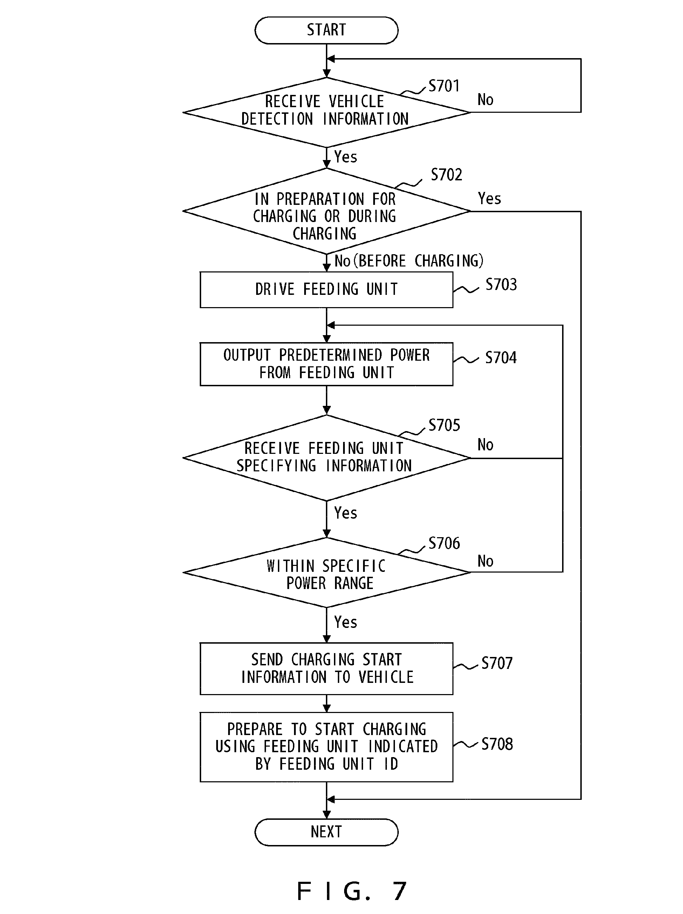

FIG. 7 is a flow diagram illustrating one example of operation of the feeding apparatus. In step S701, the feeding control unit 3 acquires vehicle detection information transmitted from the sensor 6 installed in the charge station 1 via the radio communication unit 11 of the feeding apparatus 8. When the vehicle detection information is received (Yes), processing is moved to step S702, and the vehicle detection information cannot be received (No), processing is moved to step S701. Vehicle detection information is information for notifying the feeding apparatus 8 of the presence of the vehicle 5 entering the charge station 1. In the example of FIG. 1, the sensor 6 transmits vehicle detection information to the radio communication unit 11. The feeding control unit 3 of the feeding apparatus during charging is activated, but the control unit of the feeding control unit 3 of the feeding unit not during charging (on standby) is in a sleep state. However, the communication unit is activated, and when a communication signal is receieved, the control unit is activated from a sleep state.

In step S702, the control device 401 determines whether or not the present state is of being in preparation for charging or during charging. When the state is of being in preparation for charging or during charging (Yes), processing to specify the feeding apparatus 8 is not executed. When the state is of not being in preparation for charging nor during charging (No), processing is moved to step S703. For example, whether or not the control device 401 is being used for charging is determined referring to specifying information hereinafter described of feeding information stored in the storage unit (the storage unit 602 in the case of FIG. 6) of the control device 401. When the control device 401 is not being used for charging, the control device 401 drives the feeding unit 4.

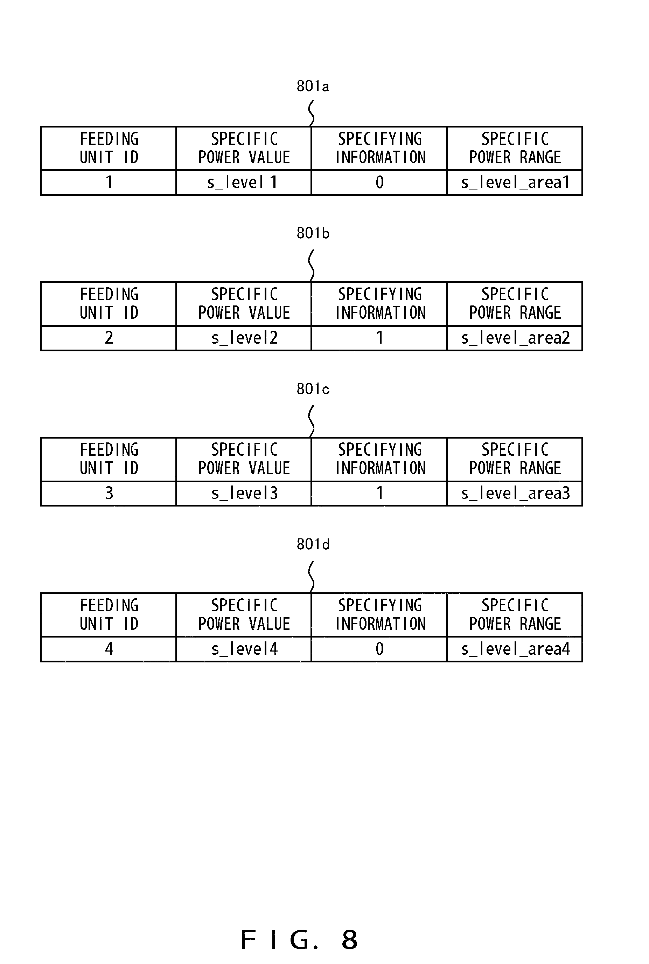

FIG. 8 is a diagram illustrating one example of a data structure of feeding information. In feeding information 801a-801d in FIG. 8, information indicated as "feeding unit ID" "specific power value" "specifying information" "specific power range" and the like is stored. In "feeding unit ID", discrimination information for discriminating the feeding apparatus or the parking area is stored. In this example, discrimination information "1" to "4" for indicating the feeding units 41-4d is stored. In "specific power value", the power level at which power is transmitted to the vehicle 5 in order to specify the feeding units 4a-4d for feeding power to the vehicle 5 entering the charge station 1 is stored. The power level at which power is transmitted to the vehicle 5 is different with respect to each feeding unit 4a-4d. In this example, information "s_level1" indicating a power level is stored in the feeding information 801a, and information "s-level2" indicating a power level is stored in the feeding information 801b. Information "s_level3" indicating a power level is stored in the feeding information 801c, and information "s_level4" indicating a power level is stored in the feeding information 801d. In "specifying information", information indicating whether or not it is being used for charging is stored. In this example, "1" is set when it is in a state in preparation to start charging or during charging, and "0" is set in cases other than that. During specifying of the feeding unit 4, "2" is set.

In "specific power range", the range of the power level needed to specify the feeding unit 4 in comparison with the power level included in the feeding unit specifying information transmitted from the vehicle 5 to the feeding apparatus 8 is stored. The "specific power range" is different with respect to each of the feeding units 4a-4d. In this example, the information "s_level_area1" indicating a specific power range is stored in the feeding information 801a, and the information "s_level_area2" indicating a specific power range is stored in the feeding information 801b. The information "s_level_area3" indicating a specific power range is stored in the feeding information 801c, and the information "s_level_area4" indicating a specific power range is stored in the feeding information 801d.

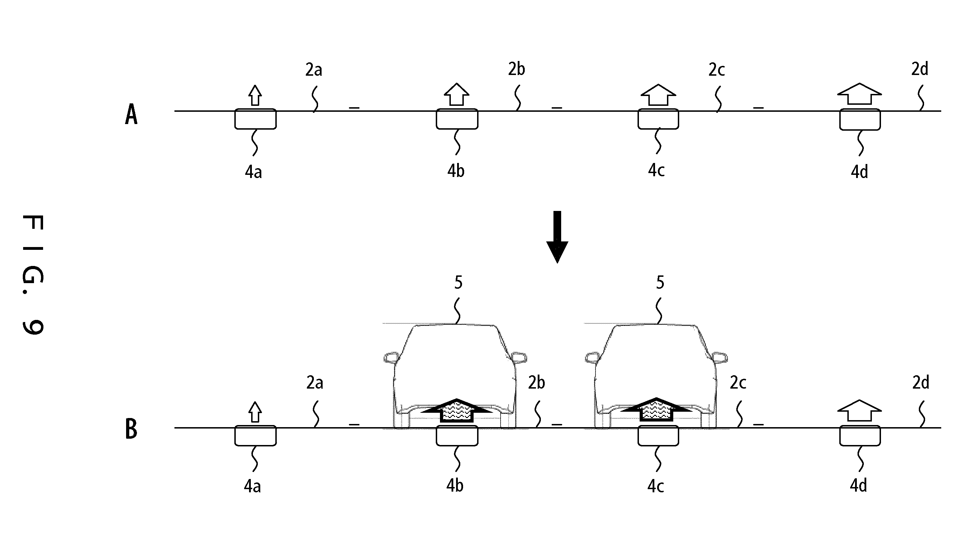

FIG. 9 is a diagram illustrating one example of a state in specifying the feeding unit and during charging. A in FIG. 9 illustrates that in order to specify the feeding units 4a-4d included in the feeding apparatus 8, each outputs a different power (arrow). B in FIG. 9 illustrates that in order to specify the feeding units 4a, 4d included in the feeding apparatus 8, each outputs a different power (arrow), and illustrates that each of the feeding units 4b, 4c outputs power used for charging in order to charge the vehicle 5 (arrow including wave pattern) .

In step S703, the control device 401 of the feeding apparatus 8 not being used for charging the charge station 1 drives the feeding unit 4. In step S704, the control unit (the control unit 601 in the case of FIG. 6) of the control device 401 refers to feeding information and makes the feeding unit 4 output a predetermined power (first power). For example, the power indicated in "s_level1" stored in the "specific power value" in the feeding information 801a is supplied to the feeding unit 4 for a predetermined time in the case of the feeding unit 4a.

The charging apparatus 7 of the vehicle 5 receives power output from the first coil 403 of the feeding unit 4, and transmits feeding unit specifying information including received power to the feeding apparatus 8.

In step S705, the control device 401 determines whether or not feeding unit specifying information has been received via the radio communication unit 11, and when the information has been received (Yes), processing is moved to step S706. When the information has not been received (No), processing is moved to step S704.

In step S706, the control device 401 compares the power level of feeding unit specifying information and the specific power range stored in the "specifying power information" of feeding information, and determines whether or not the power level is within the specific power range. When the power level is within the specific power range (Yes), processing is moved to step S707, and when the power level is not within the specific power range (No), processing is moved to step S704. Then, power is again supplied to the feeding unit 4 for a predetermined time.

However, when the processing of steps S704-S706 exceeds a predetermined time, processing is moved to step S701 and the processing is executed again.

In step S707, charging start information is transmitted via the radio communication unit 11 to the vehicle 5 which has transmitted feeding unit specifying information. The charging start information includes information for discriminating the vehicle 5 and information indicating that charging has been started. See step S1003.

In step S708, the control device 401 starts preparations for starting charging using the feeding unit 4.

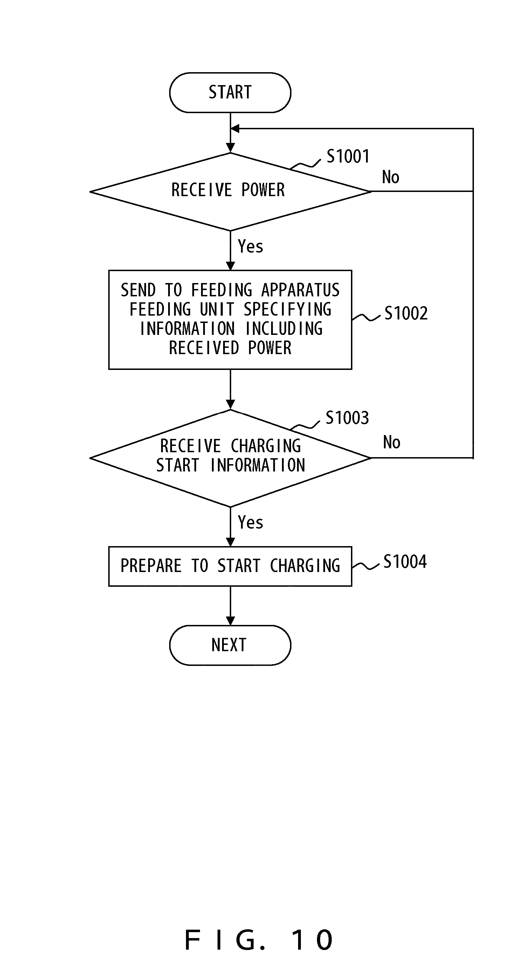

FIG. 10 is a flow diagram illustrating one example of the operation of the charging apparatus. In step S1001, the control device 501 determines whether or not power has been received. When power has been received (Yes), processing is moved to step S1002, and when power cannot be received (No), processing is moved to step S1001. For example, when a predetermined power amount or more is received, processing is moved to step S1002. However, during charging, currently executed processing with respect to charging continues, while the processing in S1001-S1004 is not executed. As detection of the fact that charging is currently being performed, determining that charging is currently being performed when a predetermined power transmitted from the feeding apparatus 8 during charging is detected is considered.

In step S1002, feeding unit specifying information including information indicating power received by the control device 501 is transmitted to the feeding apparatus 8.

In step S1003, it is determined whether or not the control device 501 has received charging start information via the communication interface (the communication interface 605 in FIG. 6), and when the information has been received (Yes), processing is moved to step S1004. When the information has not been received (No), processing is moved to step S1001.

In step S1004, the control device 501 prepares to start charging the charging apparatus 7.

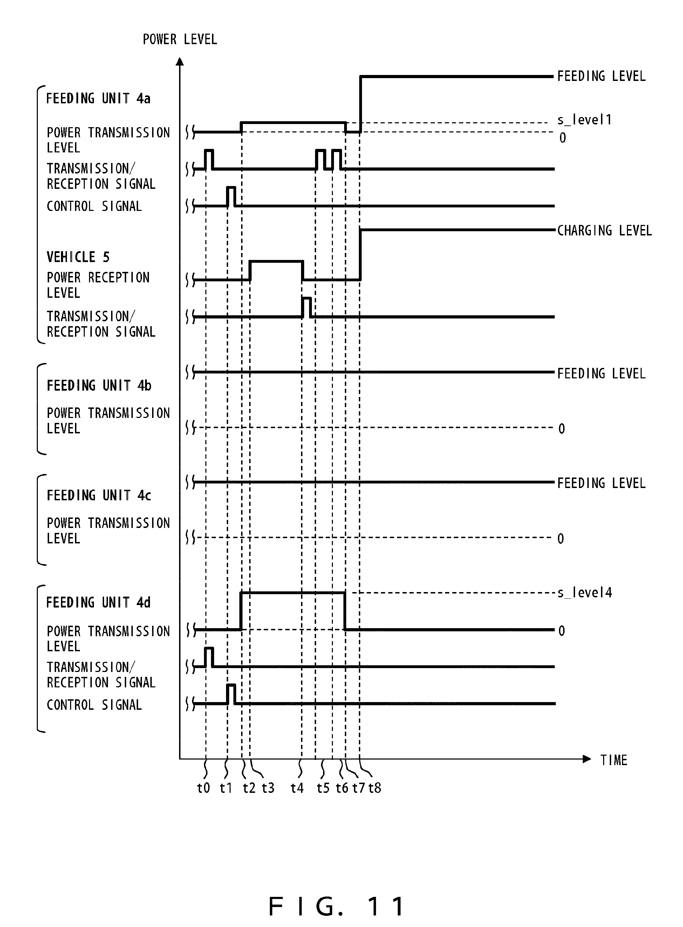

FIG. 11 is a diagram illustrating a time chart illustrating one example of operation states of the feeding apparatus and the charging apparatus. In the example in FIG. 11, when the entering vehicle 5 is to be parked in the parking area 2a, two vehicles in the parking areas 2b, 2c are already being charged, and the parking areas 2a, 2d are vacant. In the vertical axis in FIG. 11, the following are indicated: the power level at which the feeding apparatus 8 transmits power to the feeding unit 4a (power transmitting level); a signal transmitted/received by the feeding apparatus 8 in communication (transmission/reception signal); a signal for controlling the feeding apparatus 8 (control signal) ; the power level at which the vehicle 5 parked in the parking area 2a has received power (power reception level); and a signal transmitted/received by the vehicle 5 in communication (transmission/reception signal). In the vertical axis in FIG. 11, the following are indicated: the power level at which the feeding apparatus 8 transmits power to the feeding unit 4b (power transmission level); and the power level at which the feeding apparatus 8 transmits power to the feeding unit 4c (power transmission level). In the vertical axis in FIG. 11, the following are indicated: the power level at which the feeding apparatus 8 transmits power to the feeding unit 4d (power transmission level); a signal transmitted/received by the feeding apparatus 8 in communication (transmission/reception signal); and a signal for controlling the feeding apparatus 8 (control signal). The horizontal axis in FIG. 11 is the time axis.

At time t0, the feeding apparatus 8 receives vehicle detection information transmitted from the sensor 6 (step S701). In this example, the feeding units 4b, 4c are not illustrated.

At time t1, signals to drive the feeding units 4a, 4d that are not charging are output (step S703). The feeding units 4b, 4c continue charging.

At time t2, the feeding units 4a, 4d that are not charging output the predetermined power (first power) s_level1, s_level4 to specify the parking area or the feeding unit (step S704). The feeding units 4b, 4c continue charging.

At time t3, the charging apparatus 7 of the vehicle 5 parked in the parking area 2a receives power output from the feeding unit 4a (step S1001).

If the vehicle 5 parked at the parking area 2a has received power for a predetermined time, feeding unit specifying information including received power is transmitted to the feeding apparatus 8 at time t4 (step S1002). In this example, the vehicle 5 stops receiving power at time t4, but may not stop receiving power at time t4.

Since no vehicles are parked in the parking area 2d, feeding unit specifying information is not transmitted to the feeding unit 4d.

At time t5, the feeding unit specifying information transmitted from the vehicle 5 is received by the feeding unit 4a (step S705).

At time t6, the feeding apparatus 8 transmits charging start information to the vehicle 5 (step S707).

At time t7, output of the predetermined power (first power) for specifying the parking area or the feeding apparatus from the feeding units 4a, 4d of the feeding apparatus 8 is stopped. Then, at time t8, the vehicle 5 parked in the parking area 2a is charged using the feeding unit 4a. That is, the power (second power) necessary for charging is transmitted to the charging apparatus 7.

According to embodiment 1, since the feeding unit (or the parking area) can be specified without providing a sensor or the like configured to detect the vehicle position for each parking area, costs can be reduced even in a facility where a plurality of vehicles can perform non-contact charging.

In addition, since a configuration related to radio communication on a feeding apparatus side can be executed by the one radio communication unit, costs can be reduced.

Embodiment 2 will be described.

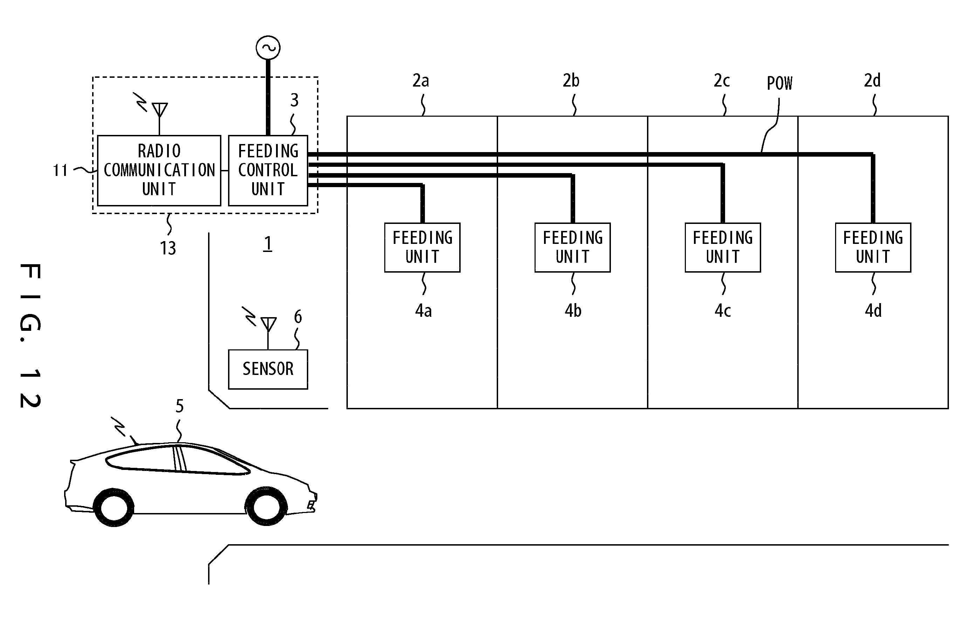

FIG. 12 is a diagram illustrating one example of a charge station in embodiment 2. In the charge station 1 illustrated in FIG. 12, there are parking areas 2a-2d for parking a vehicle. In each of the parking areas 2a-2d, feeding units 4a-4d which will be described hereinafter are arranged. A feeding apparatus includes: a second device 13 having a radio communication unit 11 which performs radio communication with the vehicle 5 or the like and communicates with a feeding control unit 3, and the one feeding control unit 3 for executing control with respect to power transmission when feeding power to the vehicle 5; and the feeding units 4a-4d for transmitting power to a vehicle 5 side. For example, the second device 13 is provided somewhere in the charge station 1, and each of the feeding units 4a-4d is controlled by the feeding control unit 3 of the second device 13.

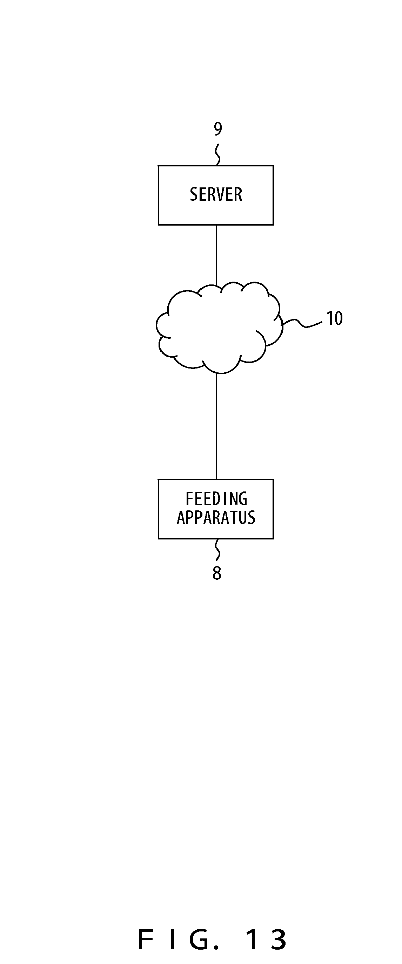

In addition, a sensor 6 is provided in the charge station 1. The sensor 6 detects the vehicle 5 entering the charge station 1, and notifies the feeding apparatus of the fact that the vehicle has been detected. FIG. 13 is a diagram illustrating the relationship between the feeding apparatus and a server in embodiment 2. The feeding apparatus illustrated in FIG. 13 communicates with the server 9 through a network 10. The server 9, for example, communicates with the feeding control unit 3 of the feeding apparatus 8, executes processing related to calculation of a charging fee, calculation of a parking fee, payments of various fees, and the like related to the parking areas 2a-2d, and transmits the processing result to the feeding control unit 3 of the feeding apparatus.

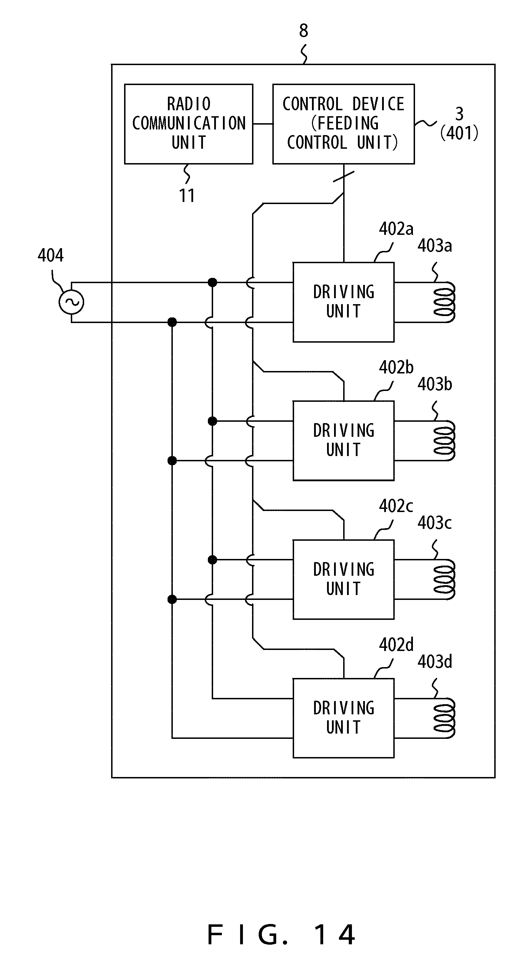

FIG. 14 is a diagram illustrating one example of the feeding apparatus in embodiment 2. The feeding apparatus 8 in FIG. 14 includes a control device 401, a plurality of driving units 402-402d, and first coils 403a-403d. The control device 401 corresponds to the feeding control unit 3. The driving units 402a-403d and the first coils 403a to 403d constitute the feeding units 4a-4d. The plurality of feeding units 4a-4d charge a charging apparatus mounted on a vehicle, in a non-contact manner.

The control device 401 (feeding control unit 3) performs control to feed to each feeding unit power determined to specify the feeding unit 4 and different for each feeding unit 4, when receiving vehicle detection information from the sensor 6 configured to detect the vehicle 5 and transmit the vehicle detection information. When the feeding control unit receives from the charging apparatus feeding unit specifying information containing information indicating the power level at which power is received from the feeding unit, if the received power level is determined to be within the specific power range stored in advance in the storage unit and indicating the determined power level range, the feeding control unit transmits to the charging apparatus charging start information indicating the start of charging. Thereafter, the feeding control unit performs control to feed to the feeding unit power of the power level for charging the battery unit of the charging apparatus.

The control device 401 (feeding control unit 3) performs control so that the feeding unit 4 in preparation for feeding power or currently feeding power does not feed power determined to specify the feeding unit 4 and different for each feeding unit, when the charging apparatus is in preparation for charging or during charging.

The driving units 402a-402d convert power supplied from a commercial power source 404 into AC at a determined frequency and a determined power level to feed it to the first coil 403. Control such as conversion is performed by the control device 401.

The first coils 403a-403d are used to feed power to the charging apparatus 7 mounted on a vehicle.

The charging apparatus 7 used for non-contact charging and mounted on the vehicle 5 includes a power receiving unit, a charging unit, and a control device. The power receiving unit receives power fed from the feeding apparatus 8. The charging unit charges a battery unit with the received power. The control device 501 (see FIG. 5) transmits feeding unit specifying information containing information indicating the received power level. When receiving charging start information for starting charging transmitted from the feeding apparatus in the case when the transmitted power level is within the specific power range indicating the determined power level range stored in the storage unit of the feeding apparatus, the control device performs control to charge the battery unit.

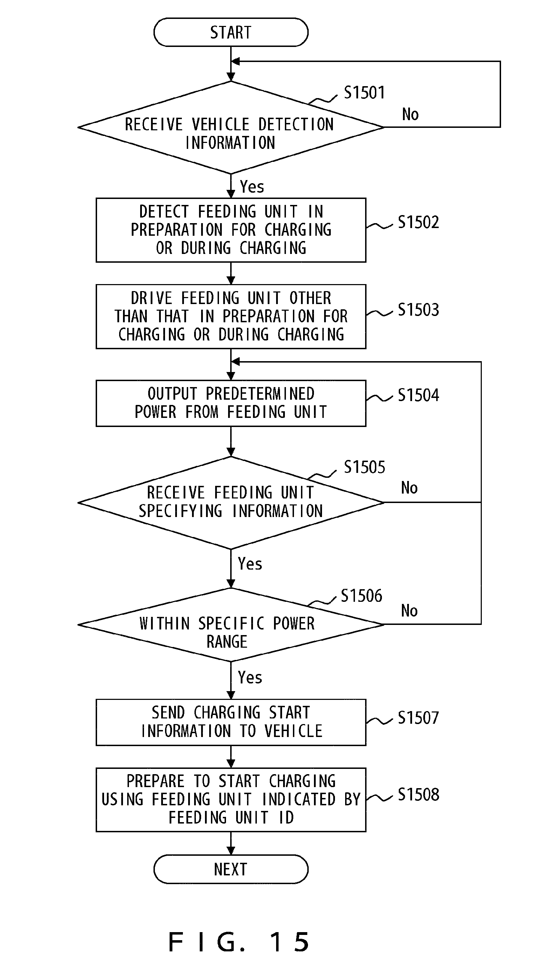

FIG. 15 is a flow diagram illustrating one example of operation of the feeding apparatus in embodiment 2. In step S1501, the communication unit 1 of the feeding control unit 3 of the feeding apparatus 8 receives vehicle detection information transmitted from the sensor 6 installed in the charge station 1. When the vehicle detection information is received (Yes), processing is moved to step S1502, and when the vehicle detection information cannot be received (No), processing is moved to step S1501. Vehicle detection information is information for notifying the feeding control unit 3 of the presence of the vehicle 5 entering the charge station 1. In the example of FIG. 12, the sensor 6 transmits vehicle detection information to the feeding control unit 3. The feeding control unit 3 during charging is activated, but the control unit of the feeding control unit 3 that is not charging (on standby) is in a sleep state. However, the communication unit is activated, and when a communication signal is received, the control unit is activated from a sleep state.

In step S1502, the control device 401 detects the feeding unit currently in preparation for charging or used during charging. For example, the control unit detects whether or not the feeding unit is being used for charging with reference to specifying information described hereinafter of the feeding information stored in the storage unit (storage unit 602 in the case of FIG. 6) of the control device 401, and the control device 401 drives the feeding unit 4 not being used for charging.

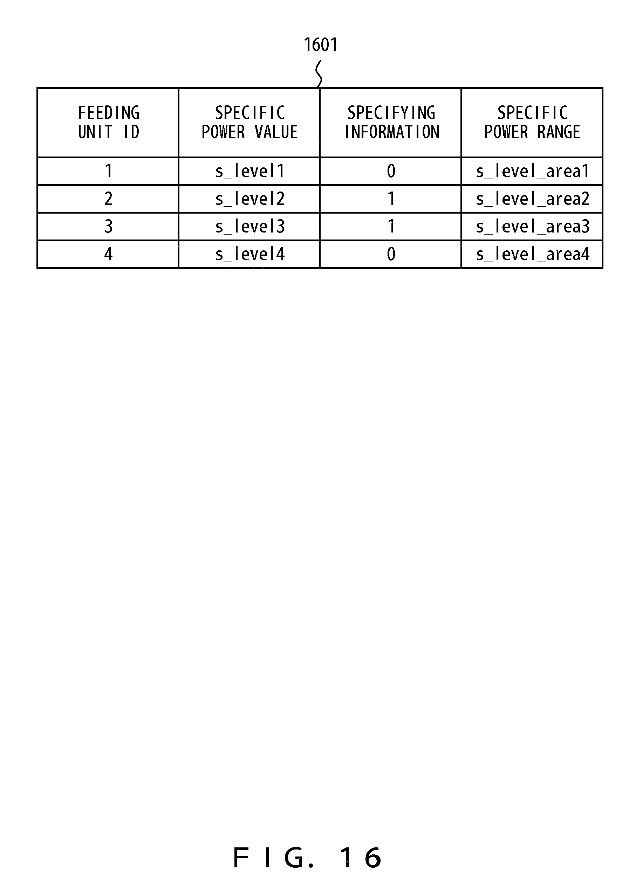

FIG. 16 is a diagram illustrating one example of a data structure of feeding information in embodiment 2. In feeding information 1601 in FIG. 16, information indicated as "feeding unit ID" "specific power value" "specifying information" "specific power range" and the like is stored. In "feeding unit ID", discrimination information for discriminating the feeding unit or the parking area is stored. In this example, discrimination information "1" to "4" for indicating the feeding units 4a-4d is stored. In "specific power value", the power level is stored at which power is transmitted to the vehicle 5 in order to specify the feeding units 4a-4d for feeding power to the vehicle 5 that has entered the charge station 1. The power level at which power is transmitted to the vehicle 5 is different with respect to each feeding unit 4a-4d. In this example, information "s_level1" "s_level2", "s_level3", "s_level4" indicating power levels of the power transmitted by the feeding units 4a-4d is stored. In "specifying information", information indicating whether or not it is being used for charging is stored. In this example, "1" is set when it is in a state in preparation to start charging or during charging, and "0" is set in the cases other than that. During specifying of the feeding apparatus 8, "2" is set.

In "specific power range", the power level range for specifying the feeding unit 4 in comparison with the power level included in the feeding unit specifying information transmitted from the vehicle 5 to the feeding control unit 3 is stored. "Specific power range" is different with respect to each of the feeding units 4a-4d. In this example, information "s_level_area1", "s_level_area2", "s_level_area3", and "s_level_area4" indicating the specific power range is stored in the feeding information 1601.

In step S1503, the control device 401 drives the feeding unit not being used for charging the charge station 1. In step S1504, the control unit (the control unit 601 in the case of FIG. 6) of the control device 401 refers to feeding information to make the feeding unit 4 output a predetermined power. For example, power indicated as "s_level1" stored in "specifying power value" in the feeding information 1601 is supplied to the feeding unit 4a for a predetermined time in the case of the feeding unit 4a.

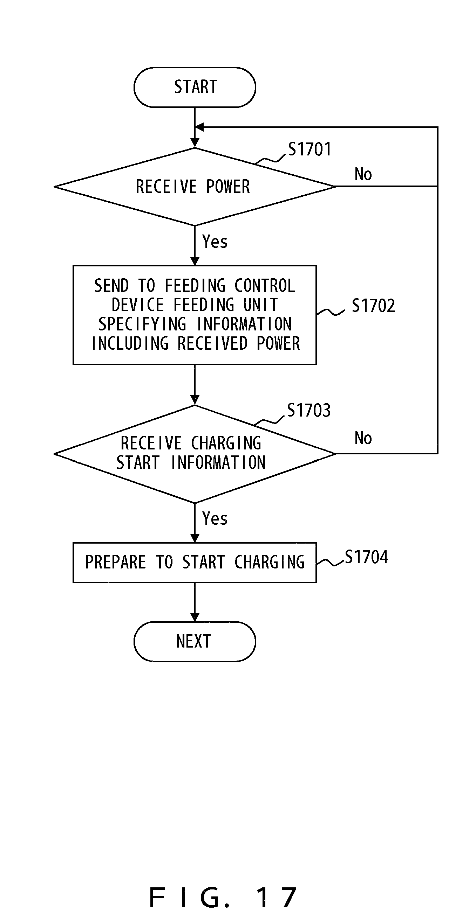

The charging apparatus 7 of the vehicle 5 receives power output from the first coil not being used for charging among the first coils 403a-403d of the feeding units 4a-4d, and transmits to the feeding control unit 3 feeding unit specifying information including information indicating the received power. See steps S1701 and S1702 in FIG. 17.

In step S1505, the control device 401 determines whether or not feeding unit specifying information is received via an antenna (antenna 609 in FIG. 6) and a communication interface (communication interface 605 in FIG. 6). When the information has been received (Yes), processing is moved to step S1506. When the information has not been received (No), processing is moved to step S1504.

In step S1506, the control device 401 compares the power level of feeding unit specifying information and the specific power range stored in the "specifying power information" of feeding information, to determine whether or not the power level is within the specific power range. When the power level is within the specific power range (Yes), processing is moved to step S1507, and when the power level is not within the specific power range (No), processing is moved to step S1504. Then, power is again supplied to the feeding unit 4 not being used for charging for a predetermined time.

However, when the processing in steps S1504-S1506 exceeds a predetermined time, processing is moved to step S1501 and the processing is executed again.

In step S1507, the control device 401 transmits charging start information via the communication interface (communication interface 605 in FIG. 6) and the antenna (antenna 609 in FIG. 6) to the vehicle 5 which has transmitted the feeding unit specifying information. The charging start information contains information for discriminating the vehicle 5 and information indicating that charging has been started. See step S1703.

In step S1508, the control device 401 starts preparations to start charging the vehicle 5 using the feeding unit 4 of the parking area in which the vehicle 5 is parked.

FIG. 17 is a flow diagram illustrating one example of the operation of the charging apparatus in embodiment 2. In step S1701, the control device 501 determines whether or not power has been received. When power has been received (Yes), processing is moved to step S1702, and when power cannot be received (No), processing is moved to step S1701. For example, when a predetermined power or greater has been received, processing is moved to step S1702. However, during charging, processing being executed currently with respect to charging continues, while the processing in S1701-S1704 is not executed. As detection of the fact of being charged, determining that currently it is in a state of being charged when a predetermined power transmitted from the feeding unit 4 is detected during charging is considered.

In step S1702, the control device 501 transmits to the feeding control unit 3 feeding unit specifying information containing information indicating received power.

In step S1703, the control device 501 determines whether or not charging start information has been received via the communication interface (the communication interface 605 in FIG. 6), and when the information has been received (Yes), processing is moved to step S1704. When the information has not been received (No), processing is moved to step S1701.

In step S1704, the control device 501 makes the charging apparatus prepare to start charging.

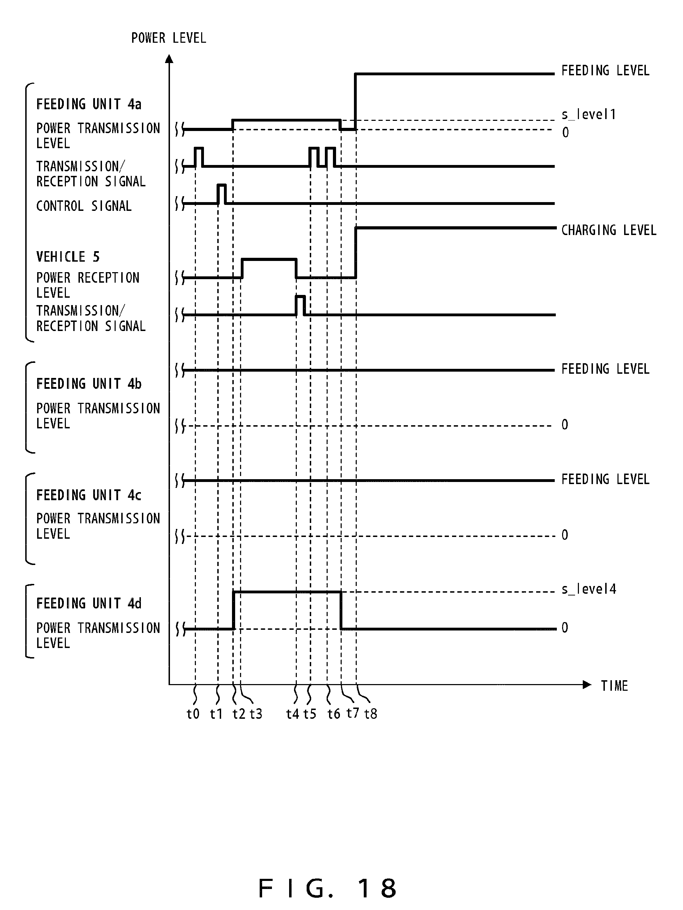

FIG. 18 is a diagram illustrating a time chart illustrating one example of operation states of the feeding apparatus and the charging apparatus in embodiment 2. In the example in FIG. 18, when the entering vehicle 5 is to be parked at the parking area 2a, two vehicles in the parking areas 2b, 2c are being charged, and the parking areas 2a, 2d are vacant. In the vertical axis in FIG. 18, the following are indicated: the power level at which power is transmitted to the feeding power 4a (power transmission level); a signal transmitted/received by the feeding control unit 3 in communication (transmission/reception signal); a signal for controlling the feeding unit 4a (control signal); the power level at which the vehicle 5 parked in the parking area 2a has received power (power reception level); and a signal transmitted/received by the vehicle 5 in communication (transmission/reception signal). In the vertical axis in FIG. 18, the following are indicated: the power level at which power is transmitted to the feeding power 4b (power transmission level); the power level at which power is transmitted to the feeding power 4c (power transmission level) ; and the power level at which power is transmitted to the feeding power 4d (power transmission level). The horizontal axis in FIG. 18 is the time axis.

At time t0, the feeding control unit 3 receives vehicle detection information transmitted from the sensor 6 (step S1501). In this example, the feeding units 4b, 4c are not illustrated.

At time t1, signals for driving the feeding units 4a, 4s not charging are output (step S1503). The feeding units 4b, 4c continue charging.

At time t2, the feeding units 4a, 4d not charging output the predetermined power s_level1, s_level4 to specify the parking area or the feeding unit (step S1504) . The feeding units 4b, 4c continue charging.

At time t3, the charging apparatus 7 of the vehicle 5 parked in the parking area 2a receives power output from the feeding unit 4a (step S1701).

If the vehicle 5 parked in the parking area 2a has received power for a predetermined time, feeding unit specifying information including received power is transitted to the feeding control unit 3 at time t4 (step S1702) . In this example, the vehicle 5 stops receiving power at time t4, but may not stop receiving power at time t4.

Since no vehicles are parked in the parking area 2d, feeding unit specifying information is not transmitted to the feeding unit 4d.

At time t5, the feeding unit specifying information transmitted from the vehicle 5 is received by the feeding control unit 3 (step S1505).

At time t6, the feeding control unit 3 transmits charging start information to the vehicle 5 (step S1507).

At time t7, an output of the predetermined power for specifying the parking area or the feeding unit from the feeding units 4a, 4d is stopped. Then, at time t8, the vehicle 5 parked at the parking area 2a is charged using the feeding unit 4a.

According to embodiment 2, since the feeding unit (or the parking area) can be specified without providing a sensor or the like configured to detect the vehicle position for each parking area, costs can be reduced even in a facility where a plurality of vehicles can perform non-contact charging.

In addition, since a configuration related to radio communication on a feeding apparatus side can be executed by the one radio communication unit, costs can be reduced.

The present invention is not limited to the above embodiments 1 and 2, and various improvements and changes can be made within a scope not deviating from the gist of the present invention.

## Claims

1. A feeding apparatus which feeds power in a non-contact manner to a battery mounted on a vehicle, the feeding apparatus comprising:
a feeding unit configured to output first power and second power;
a feeding control unit configured to control the feeding unit; and
a radio communication unit configured to perform radio communication, wherein
the feeding control unit makes the feeding unit output the first power of a magnitude corresponding to the feeding unit in order to specify the feeding unit, acquires, through the radio communication unit, feeding unit specifying information transmitted by the vehicle which has received the first power, determines whether or not the magnitude of the power indicated by the feeding unit specifying information is within a specific power range stored in advance, and transmits to the vehicle charging start information to start charging when determining that the magnitude is within the specific power range, and controls the feeding unit specified by the feeding unit specifying information so that it outputs the second power.

2. The feeding apparatus according to claim 1, wherein
the feeding control unit starts output of the first power corresponding to the feeding unit, when receiving the vehicle detection information from a vehicle detection sensor provided outside via the radio communication unit.

3. The feeding apparatus according to claim 1, further comprising:
a first device including the one or plurality of feeding units, and the one or plurality of feeding control units each associated with each of the feeding units; and
the radio communication unit configured to perform radio communication with each feeding control unit and arranged separately from the first device.

4. The feeding apparatus according to claim 1, further comprising:
a second device including the radio communication unit and the feeding control unit; and
the one or plurality of feeding units arranged separately from the second device, and configured to be controlled by the feeding control unit.

5. The feeding apparatus according to any of claims 1-4, wherein
the feeding control unit performs control so that the feeding unit in preparation for power feeding or during power feeding does not feed the first power, when the charging apparatus is in preparation for charging or is charging.

6. A charging apparatus used for non-contact charging and mounted on a vehicle, the charging apparatus mounted on the vehicle comprising:
a power receiving unit configured to receive power fed from a feeding apparatus;
a charging unit configured to charge a battery unit with the received power; and
a control device configured to transmit feeding unit specifying information containing information indicating the received power level, and to perform control to charge the battery unit when charging start information for starting charging transmitted from the feeding apparatus is received in the case wherein the transmitted power level is within a specific power range that is stored in a storage unit of the feeding apparatus and that indicates the determined power level range.

7. A feeding method used for non-contact charging wherein a computer of the feeding apparatus executes processing to:
execute control so that a feeding unit arranged in the feeding apparatus configured to feed power in a non-contact manner to a charging apparatus mounted on a vehicle outputs first power of a magnitude corresponding to the feeding unit in order to specify each of the feeding units arranged in the feeding apparatus configured to feed power in a non-contact manner to the charging apparatus;
acquire feeding unit specifying information transmitted by the vehicle which has received the first power via the radio communication unit;
determine whether or not the magnitude of the power indicated by the received feeding unit specifying information is within a specific power range stored in advance in a storage unit, when receiving the feeding unit specifying information;
transmit to the vehicle charging start information for starting charging, when the magnitude of power is determined to be within the specific power range; and
perform control so that the feeding unit specified by the feeding unit specifying information outputs second power.

8. A feeding method used for non-contact charging, wherein a computer of the feeding apparatus executes processing to:
execute control so that a plurality of feeding units connected in parallel with each other to the computer and configured to feed power in a non-contact manner to a charging apparatus mounted on a vehicle output first power of a magnitude corresponding to the feeding units so as to specify each of the feeding units;
acquire feeding unit specifying information transmitted by the vehicle which has received the first power, via the radio communication unit;
determine whether or not the magnitude of power indicated by the received feeding unit specifying information is within a specific power range stored in advance in a storage unit;
transmit to the vehicle charging start information for starting charging when the magnitude of power is determined to be within the specific power range; and
execute control so that the feeding unit specified by the feeding unit specifying information outputs second power.

9. A feeding program used for non-contact charging, the feeding program causing a computer of the feeding apparatus to execute processing to:
perform control so that the feeding unit provided in the feeding apparatus configured to feed power in a non-contact manner to a charging apparatus mounted on a vehicle outputs first power of a magnitude corresponding to the feeding unit in order to specify each feeding unit provided in the feeding apparatus configured to feed power in a non-contact manner to the charging apparatus;
acquire feeding unit specifying information sent by the vehicle which has received the first power, via the radio communication unit;
determine whether or not the magnitude of power indicated by the received feeding unit specifying information is within a specific power range stored in advance in the storage unit, when the feeding unit specifying information has been received;
transmit to the vehicle charging start information for starting charging, when the magnitude of power is determined to be within the specific power range; and
execute control to make the feeding unit specified by the feeding unit specifying information output second power.

10. A feeding program used for non-contact charging, the feeding program causing a computer of the feeding apparatus to execute processing to:
execute control so that a plurality of feeding units connected in series with each other to the computer and configured to feed power in a non-contact manner to a charging apparatus mounted on a vehicle output first power of a magnitude corresponding to the feeding units in order to specify each of the feeding units;
acquire feeding unit specifying information sent by the vehicle which has received the first power via the radio communication unit;
determine whether or not the magnitude of power indicated by the received feeding unit specifying information is within a specific power range stored in advance in a storage unit when receiving the feeding unit specifying information;
transmit to the vehicle charging start information for starting charging, when the magnitude of power is determined to be within the specific power range; and
execute control so that the feeding unit specified by the feeding unit specifying information outputs second power.
